# EUROPEAN PATENT APPLICATION

(11) **EP 4 628 406 A1**
(43) Date of publication of application: **08.10.2025**
(21) Application number: 23895951.4
(22) Date of filing: 25.06.2023
(51) Int. Cl.: B64C 27/28

(54) **METHOD FOR QUICKLY ADDING CANARD OUTER SEGMENT**

(30) Priority: 02.12.2022 US 202263385773 P; 02.12.2022 US 202263385771 P; 02.12.2022 US 202263385772 P
(71) Applicant: Autoflight (Kunshan) Co., Ltd., Suzhou, Jiangsu 215345 (CN)
(72) Inventor: TIAN, Yu, Suzhou, Jiangsu 215345 (CN); CUI, Yongqiang, Suzhou, Jiangsu 215345 (CN)
(74) Representative: MERH-IP Matias Erny Reichl Hoffmann Patentanwälte PartG mbB
(86) International application number: PCT/CN2023/102115
(87) International publication number: WO 2024/113787

(57) **Abstract**

The present invention belongs to the field of aircraft, and discloses a method for rapidly adding a canard outer section. The method comprises: S1: Providing a canard outer section; S2: Providing a drone fuselage, wherein a fixed wing of the drone fuselage is provided with an arm; S3: Inserting the canard outer section into the arm. The canard outer section comprises a positioning member and a locking member. After installing the canard outer section at a fixed position on the arm via the positioning member, the canard outer section and the arm are locked using the locking member.

## Description

### FIELD OF THE INVENTION

The invention relates to the field of aircraft, in particular to a method for rapidly adding an outer section of a canard wing.

### BACKGROUND OF THE INVENTION

During practical use, it has been observed that aircraft takeoff involves different operating conditions. For example, the aircraft may require a larger cruise payload during flight, need to reduce noise pollution during flight, or minimize energy consumption during operation. To address these requirements, a rapid-configuration structure must be designed to enable the aircraft to meet varying cruise payload demands.

### SUMMARY OF THE INVENTION

The purpose of the present invention is to provide a method for rapidly adding a canard outer section, featuring simple and time-efficient operation to achieve rapid attachment of the canard to an arm.

To fulfill this purpose, the invention adopts the following technical solution:
The present invention provides a method for rapidly adding a canard outer section, comprising:
S1: Providing a canard outer section;
S2: Providing a drone fuselage, wherein a fixed wing of the drone fuselage is provided with an arm;
S3: Inserting the canard outer section into the arm. The canard outer section comprises a positioning member and a locking member. After installing the canard outer section at a fixed position on the arm via the positioning member, the canard outer section and the arm are locked using the locking member.

Preferably, the canard outer section extends from an end away from the fixed wing to an end close to the fixed wing. In a cross-section along its thickness direction, the canard outer section is divided by the positioning member into three regions: a first region, a second region, and a third region. The locking member is located in the first region and extends from the end of the canard outer section away from the fixed wing to one side (upper or lower surface) of the canard outer section away from the fixed wing.

Preferably, the positioning member comprises a first positioning member and a second positioning member. The first positioning member is located at a boundary between the first and second regions, and the second positioning member is located at a boundary between the second and third regions. The diameter of the positioning member ranges from 20 mm to 40 mm.

Preferably, the diameter of the first positioning member is larger than that of the second positioning member to withstand greater stress from the arm. The diameter ratio between the first positioning member and the second positioning member is 1.44:1.

Preferably, the canard outer section comprises a fixed base. Before S3 (inserting the canard outer section into the arm), the method further comprises S30: Placing the fixed base inside the canard outer section. The fixed base is positioned within a region enclosed by the upper and lower wing surfaces of the canard outer section away from the fixed wing and the junction of the upper and lower wing surfaces of the canard outer section close to the fixed wing.

Preferably, the fixed base placed inside the canard outer section is provided with mounting holes. One end of the positioning member is connected to the fixed base inside the canard outer section via the mounting holes, and the other end of the positioning member is connected to the arm.

Preferably, the positioning member is fixed inside the canard outer section by adhesive bonding.

Preferably, the locking member comprises a bolt and a locking component. The locking component has internal threads that engage with the bolt to restrict displacement of the bolt. The step of locking the canard outer section and the arm using the locking member specifically comprises: installing the bolt in the first region, then securing the canard outer section and the arm using the locking component.

Preferably, the maximum distance between two endpoints on the outer periphery of the locking component is greater than the maximum distance between two endpoints on the cross-section of the locking component in the thickness direction of the canard outer section within the first region, ensuring that the locking component does not rotate with the bolt.

The present invention further provides a drone, comprising a canard outer section locked using the method for rapidly adding a canard outer section as described above.

The present invention employs two nested positioning members combined with a locking component to position and fasten the canard outer section. This enables rapid fixation of the canard to the original aircraft fuselage within 20 minutes, meeting varying payload requirements during drone cruise.

The beneficial effects of the present invention are as follows: By applying the method for rapidly adding a canard outer section, the lift of the aircraft in the fixed-wing state can be increased by 8%-20% compared to the original lift value obtained from the original aircraft platform, thereby enhancing the cruise payload capacity of the aircraft.

### BRIEF DESCRIPTION OF DRAWINGS

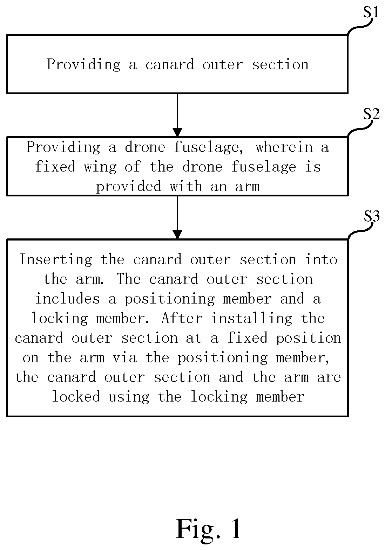

Figure 1 is a flowchart of the method for rapidly adding a canard outer section of the present invention;

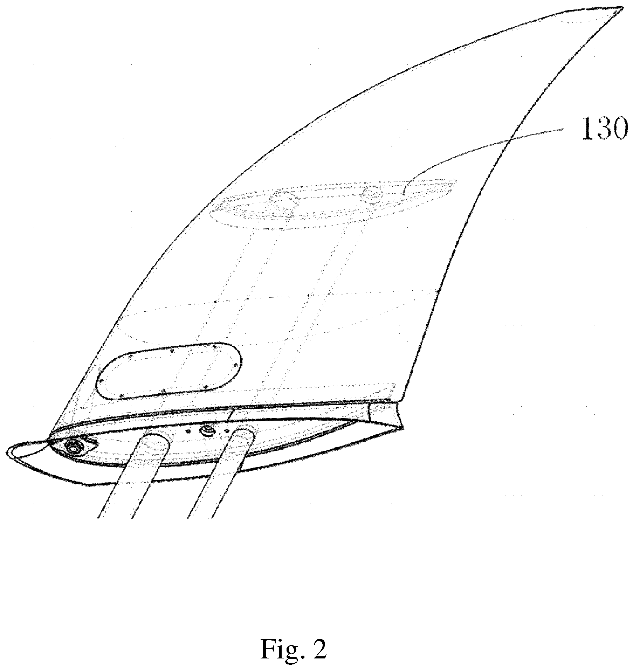

Figure 2 is a schematic diagram of the canard outer section of the present invention;

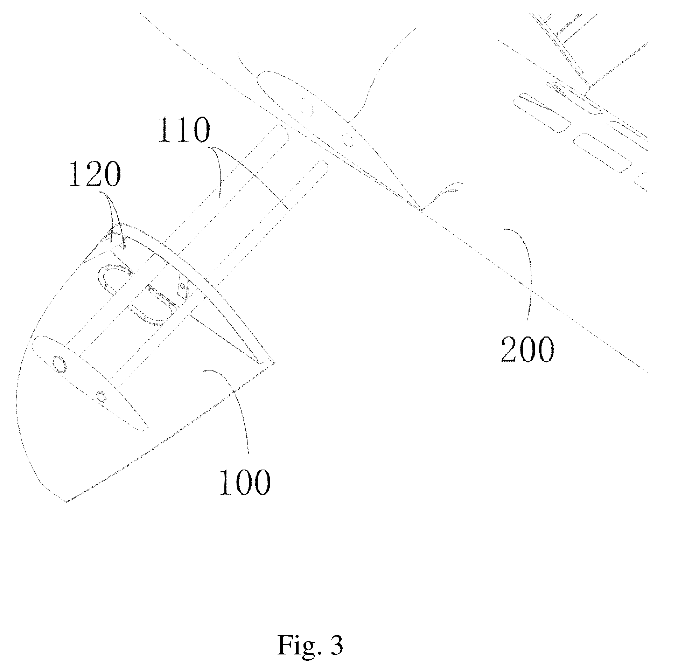

Figure 3 is a schematic diagram of the positioning member of the present invention;

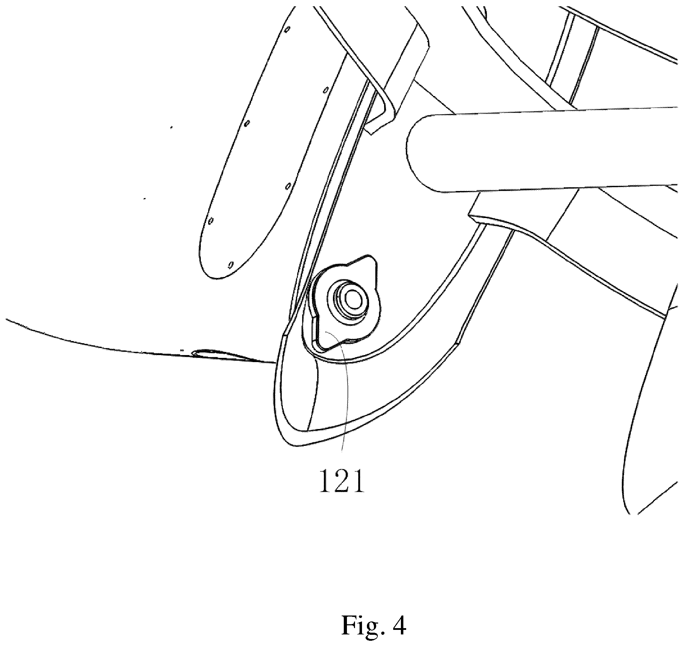

Figure 4 is a schematic diagram of the locking member of the present invention.

### DETAILED DESCRIPTION

The following embodiments further illustrate the technical solutions of the present invention. It should be understood that the specific embodiments described herein are merely for explaining the present invention. Additionally, it should be noted that, for ease of description, the drawings only show parts related to the present invention and not all components.

In the description of the present invention, it should be noted that unless explicitly specified or defined otherwise, the terms "install," "connect," and "link" should be interpreted broadly. For example, connections may be fixed or detachable, mechanical or electrical, direct or indirect through an intermediate medium, or internal communication between two components. For those of ordinary skill in the art, the specific meanings of these terms in the present invention can be understood based on practical contexts.

In the present invention, unless explicitly specified or defined otherwise, a first feature being "on" or "under" a second feature may include direct contact between the first and second features, or indirect contact through additional features between them. Moreover, the first feature being "above," "over," or "on top of" the second feature includes the first feature being directly above, diagonally above, or merely at a higher horizontal level than the second feature. Similarly, the first feature being "under," "below," or "underneath" the second feature includes the first feature being directly below, diagonally below, or merely at a lower horizontal level than the second feature.

The present invention provides a method for rapidly adding a canard outer section, comprising:
S1: Providing a canard outer section 100;
S2: Providing a drone fuselage, wherein a fixed wing of the drone fuselage is provided with an arm 200;
S3: Inserting the canard outer section 100 into the arm 200. The canard outer section 100 comprises a positioning member 110 and a locking member 120. After installing the canard outer section 100 at a fixed position on the arm 200 via the positioning member 110, the canard outer section 100 and the arm 200 are locked using the locking member 120.

By applying this method to add the canard outer section, the lift of the aircraft in the fixed-wing state can be increased by 8%-20% compared to the original lift value obtained from the original aircraft platform. Additionally, after installing the rapidly detachable canard outer section, the sudden nose-diving effect during flight can be mitigated, avoiding undesired pitching moments and preventing reduced flight efficiency caused by compensating for such moments. Furthermore, after installing the canard outer section, the structural combination of the canard outer section with the original aircraft platform improves the static stability margin of the aircraft by approximately 2%, thereby reducing control losses in the flight control system.

Further, the canard outer section 100 extends from an end away from the fixed wing to an end close to the fixed wing. In a cross-section along its thickness direction, it is divided by the positioning member 110 into three regions: a first region, a second region, and a third region. The locking member 120 is located in the first region and extends from the end of the canard outer section 100 away from the fixed wing to one side (upper or lower surface) of the canard outer section 100 away from the fixed wing. The positioning member 110 enables rapid positioning of the canard outer section 100 onto the arm.

Specifically, in the present invention, the positioning member 110 comprises a first positioning member and a second positioning member. The first positioning member is located at the boundary between the first and second regions, and the second positioning member is located at the boundary between the second and third regions. Preferably, the diameter of the positioning member 110 ranges from 20 mm to 40 mm.

In this embodiment, the diameter of the first positioning member is larger than that of the second positioning member to withstand greater stress from the arm. The diameter ratio between the first and second positioning members is 1.44:1. Of course, in other embodiments, the diameters of the first and second positioning members may be equal.

The present invention adopts two nested positioning members combined with a locking member to position and fasten the canard outer section. This allows rapid fixation of the canard to the original aircraft fuselage within 20 minutes, meeting varying payload requirements during drone cruise.

Further, the canard outer section 100 comprises a fixed base 130. Before S3 (inserting the canard outer section 100 into the arm 200), the method additionally comprises S30: Placing the fixed base 130 inside the canard outer section 100. The fixed base 130 is positioned within a region enclosed by the upper and lower wing surfaces of the canard outer section 100 away from the fixed wing and the junction of the upper and lower wing surfaces of the canard outer section 100 close to the fixed wing.

As an example, the fixed base 130 placed inside the canard outer section 100 is provided with mounting holes. One end of the positioning member 110 is connected to the fixed base 130 inside the canard outer section 100 via these mounting holes, while the other end is connected to the arm 200. Preferably, the positioning member 110 is fixed inside the canard outer section 100 by adhesive bonding.

Notably, in the present invention, the locking member 120 comprises a bolt and a locking component 121. The locking component 121 has internal threads that engage with the bolt to restrict its displacement. The step of locking the canard outer section 100 and the arm 200 using the locking member 120 specifically comprises: installing the bolt in the first region, then securing the canard outer section 100 and the arm 200 using the locking component 121.

Preferably, the maximum distance between two endpoints on the outer periphery of the locking component 121 is greater than the maximum distance between two endpoints on the cross-section of the locking component 121 in the thickness direction of the canard outer section 100 within the first region. This ensures that the locking component 121 does not rotate with the bolt, i.e., the locking component 121 provides an anti-loosening effect.

The present invention further provides a drone, which comprises a canard outer section 100 locked using the method for rapidly adding a canard outer section as described above.

The above embodiments are only illustrative of the principles and efficacy of the present invention. Any person skilled in the art may modify or alter the embodiments without departing from the intended purpose of the invention. Therefore, all equivalent modifications or changes made by those with ordinary skill in the art within the scope of the invention's objectives shall remain covered by the claims of the present invention.

## Claims

1. A method for rapidly adding a canard outer section, **characterized by** comprising:
S1: Providing a canard outer section 100;
S2: Providing a drone fuselage, wherein a fixed wing of the drone fuselage is provided with an arm 200;
S3: Inserting the canard outer section 100 into the arm 200, wherein the canard outer section 100 comprises a positioning member 110 and a locking member 120; after installing the canard outer section 100 at a fixed position on the arm 200 via the positioning member 110, locking the canard outer section 100 and the arm 200 using the locking member 120.

2. The method for rapidly adding a canard outer section according to claim 1, **characterized in that**: the canard outer section 100 extends from an end away from the fixed wing to an end close to the fixed wing; in a cross-section along its thickness direction, the canard outer section 100 is divided by the positioning member 110 into three regions: a first region, a second region, and a third region; the locking member 120 is located in the first region and extends from an end of the canard outer section 100 away from the fixed wing to one side of either an upper wing surface or a lower wing surface of the canard outer section 100 away from the fixed wing.

3. The method for rapidly adding a canard outer section according to claim 1, **characterized in that**: the positioning member 110 comprises a first positioning member and a second positioning member; the first positioning member is located at a boundary between the first region and the second region, and the second positioning member is located at a boundary between the second region and the third region; a diameter of the positioning member 110 ranges from 20 mm to 40 mm.

4. The method for rapidly adding a canard outer section according to claim 3, **characterized in that**: a diameter of the first positioning member is larger than that of the second positioning member to withstand greater stress from the arm; a diameter ratio between the first positioning member and the second positioning member is 1.44:1.

5. The method for rapidly adding a canard outer section according to claim 1, **characterized in that**: the canard outer section 100 comprises a fixed base 130; before S3 of inserting the canard outer section 100 into the arm 200, the method further comprises S30: placing the fixed base 130 inside the canard outer section 100, wherein the fixed base 130 is positioned within a region enclosed between the upper and lower wing surfaces of the canard outer section 100 away from the fixed wing and a junction of the upper and lower wing surfaces of the canard outer section 100 close to the fixed wing.

6. The method for rapidly adding a canard outer section according to claim 5, **characterized in that**: the fixed base 130 placed inside the canard outer section 100 is provided with mounting holes; one end of the positioning member 110 is connected to the fixed base 130 inside the canard outer section 100 via the mounting holes, and the other end of the positioning member 110 is connected to the arm 200.

7. The method for rapidly adding a canard outer section according to claim 6, **characterized in that**: the positioning member 110 is fixed inside the canard outer section 100 by adhesive bonding.

8. The method for rapidly adding a canard outer section according to claim 2, **characterized in that**: the locking member 120 comprises a bolt and a locking component 121; the locking component 121 has internal threads that engage with the bolt to restrict displacement of the bolt; the step of locking the canard outer section 100 and the arm 200 using the locking member 120 specifically comprises: installing the bolt in the first region, then securing the canard outer section 100 and the arm 200 using the locking component 121.

9. The method for rapidly adding a canard outer section according to claim 8, **characterized in that**: a maximum distance between two endpoints on an outer periphery of the locking component 121 is greater than a maximum distance between two endpoints on a cross-section of the locking component 121 in the thickness direction of the canard outer section 100 within the first region, ensuring that the locking component 121 does not rotate with the bolt.

10. A drone, **characterized in that**: the drone comprises a canard outer section 100 locked using the method for rapidly adding a canard outer section according to any one of claims of 1-9.
